# EUROPEAN PATENT APPLICATION

(11) **EP 2 557 554 A1**
(43) Date of publication of application: **13.02.2013**
(21) Application number: 12176995.4
(22) Date of filing: 19.07.2012
(51) Int. Cl.: G09B 7/00, G06Q 50/00

(54) **Data display apparatus, data display method, and recording medium storing data display control program**

(30) Priority: 20.07.2011 JP 2011158516
(71) Applicant: CASIO COMPUTER CO., LTD., Shibuya-ku, Tokyo 151-8543 (JP)
(72) Inventor: Yoshizawa, Hiroaki, Hamura-shi, Tokyo 205-8555 (JP)
(74) Representative: Grünecker, Kinkeldey, Stockmair & Schwanhäusser

(57) **Abstract**

A data display apparatus that has a display unit includes an application storage unit, a display controller, an available-application-type detector, and an available-application-type display controller. The application storage unit stores a type of application. The display controller displays a plurality of pieces of data in a data display area on the display unit. The available-application-type detector detects a type of available application, for which each piece of data displayed in the data display area is usable, in the type of application stored in the application storage unit. The available-application-type display controller displays the type of available application for each piece of data, with the type of available application being associated with each piece of data, based on a detection result obtained by the available-application-type detector.

## Description

### BACKGROUND OF THE INVENTION

### 1. Field of the Invention

The present invention relates to a data display apparatus, a data display method, and a recording medium storing a data display control program.

### 2. Description of Related Art

Conventional scientific electronic calculators incorporate various learning applications including an application for input/edit of numerical expressions and an application for graph drawing, and can execute these learning applications in separate display areas.

Such scientific electronic calculators have a state in which both a teaching-material display area and a graph area are displayed, where the teaching-material display area displays a plurality of pieces of data such as a numerical expression, and where the graph area displays an execution screen of a graph drawing application. In such a state, a user drags and drops teaching material data of a functional expression from the teaching-material display area to the graph area, so that a graph of the functional expression is drawn in the graph area. According to such a technique, a user can input teaching material data in the teaching-material display area to a learning application, for which the teaching material data is usable, through drag and drop of the teaching material data to an execution area of the learning application.

Learning applications for recent scientific electronic calculators have been increasingly diversified, and various types of teaching material data are accordingly displayed. Therefore, unfortunately, a user cannot readily find which teaching material data is usable for which learning application, which results in poor usability.

### SUMMARY OF THE INVENTION

An object of the present invention is to provide a data display apparatus, a data display method, and a recording medium storing a data display control program that allow a user to readily understand the correspondence between teaching material data and a learning application.

According to a first aspect of the present invention, there is provided a data display apparatus including a display unit, the apparatus including: an application storage unit that stores a type of application; a display controller that displays a plurality of pieces of data in a data display area on the display unit; an available-application-type detector that detects a type of available application, for which each of the pieces of data displayed in the data display area is usable, in the type of application stored in the application storage unit; and an available-application-type display controller that displays the type of available application for each of the pieces of data displayed in the data display area, with the type of available application being associated with each of the pieces of data, based on a detection result obtained by the available-application-type detector.

According to a second aspect of the present invention, there is provided a data display apparatus including a display unit, the apparatus including: an application storage unit that stores a type of application; a display controller that displays a plurality of pieces of data in a data display area on the display unit; an application execution unit that puts the application into an execution state based on a user operation; and a usable-data distinguishing controller that distinguishably displays a piece of data usable for the application in the execution state, among the pieces of data displayed in the data display area.

According to a third aspect of the present invention, there is provided a data display apparatus including a display unit, the apparatus including: an application storage unit that stores a plurality of types of applications; a display controller that displays a file to be used for learning in a data display area on the display unit, the file including text data and one or more pieces of data; a data specifying unit that specifies a region of a content displayed in the data display area, the region including at least one of the pieces of data, based on a user operation; a text-area display controller that displays a text display area on the display unit and displays the text data in the region specified by the data specifying unit in the text display area; an available-application-type detector that detects a type of available application, for which each of the at least one of the pieces of data in the specified region is usable, in the types of applications; and an execution-button display controller that displays an execution button to execute the available application for the at least one of the pieces of data specified by the data specifying unit, the execution button being displayed at a position corresponding to a position of each of the at least one of the pieces of data, in the text data displayed in the text display area, based on a detection result obtained by the available-application-type detector.

### BRIEF DESCRIPTION OF THE DRAWINGS

The above and other objects, advantages and features of the present invention will become more fully understood from the detailed description given hereinbelow and the appended drawings which are given by way of illustration only, and thus are not intended as a definition of the limits of the present invention, and wherein:
FIG. 1 is a block diagram illustrating a schematic configuration of a data display apparatus;
FIG. 2 is a flowchart illustrating a flow of an information display process;
FIG. 3 is a flowchart illustrating a flow of another information display process;
FIG. 4 is a flowchart illustrating a flow of a data recognition process;
FIG. 5 is a flowchart illustrating a flow of an application icon display process;
FIG. 6 is a flowchart illustrating a flow of an expression/figure/table data processing function determination process;
FIG. 7 is a flowchart illustrating a flow of an application icon setting process;
FIG. 8 is a flowchart illustrating a flow of a clip icon tap process;
FIG. 9 is a flowchart illustrating a flow of a clip button tap process;
FIG. 10 is a flowchart illustrating a flow of an expression/figure/table data position tap process;
FIG. 11 is a flowchart illustrating a flow of an expression/figure/table data paste process and a flow of a drag/drop process;
FIG. 12 is a flowchart illustrating a flow of an application icon touch process;
FIG. 13A illustrates a displaying content on a display;
FIG. 13B illustrates another displaying content on the display;
FIG. 14A illustrates another displaying content on the display;
FIG. 14B illustrates another displaying content on the display;
FIG. 15A illustrates another displaying content on the display;
FIG. 15B illustrates another displaying content on the display;
FIG. 16A illustrates another displaying content on the display;
FIG. 16B illustrates another displaying content on the display;
FIG. 17 illustrates another displaying content on the display; and
FIG. 18A illustrates another displaying content on the display;
FIG. 18B illustrates another displaying content on the display;
FIG. 18C illustrates another displaying content on the display; and
FIG. 18D illustrates another displaying content on the display.

### DESCRIPTION OF THE PREFERRED EMBODIMENTS

An embodiment according to the present invention is now described in detail with reference to the accompanying drawings. The scope of the invention is not limited to the exemplary illustrations.

### [configuration]

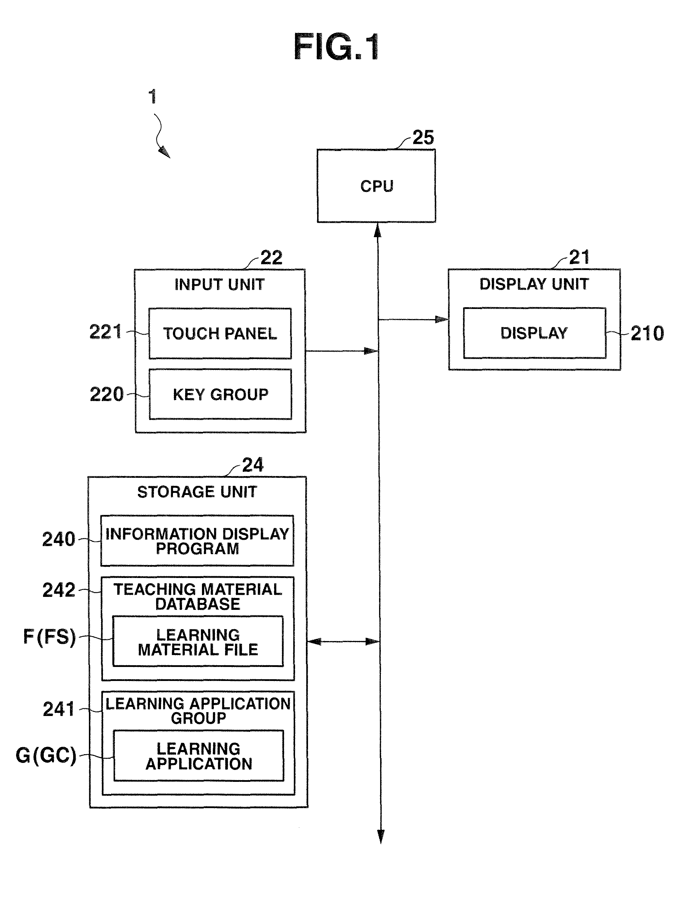

FIG. 1 is a block diagram illustrating a schematic configuration of a data display apparatus 1 of the embodiment.

As shown in FIG. 1, the data display apparatus 1 of the embodiment includes a display unit 21, an input unit 22, a storage unit 24, and a CPU 25.

The display unit 21 includes a display 210, and displays various types of information on the display 210 in response to display signals received from the CPU 25. The display 210 of the embodiment is integrated with a touch panel 221 that can accept a touch operation by a user.

The input unit 22 includes a key group 220 and the touch panel 221, and outputs a signal corresponding to the kind of a pressed key or a touched position on the touch panel 221 to the CPU 25.

The storage unit 24 is a memory that stores programs and data for achieving various functions of the data display apparatus 1, and functions as a working area of the CPU 25. In the embodiment, the storage unit 24 stores an information display program 240 according to the invention, a teaching material database 242, and a learning application group 241, for example.

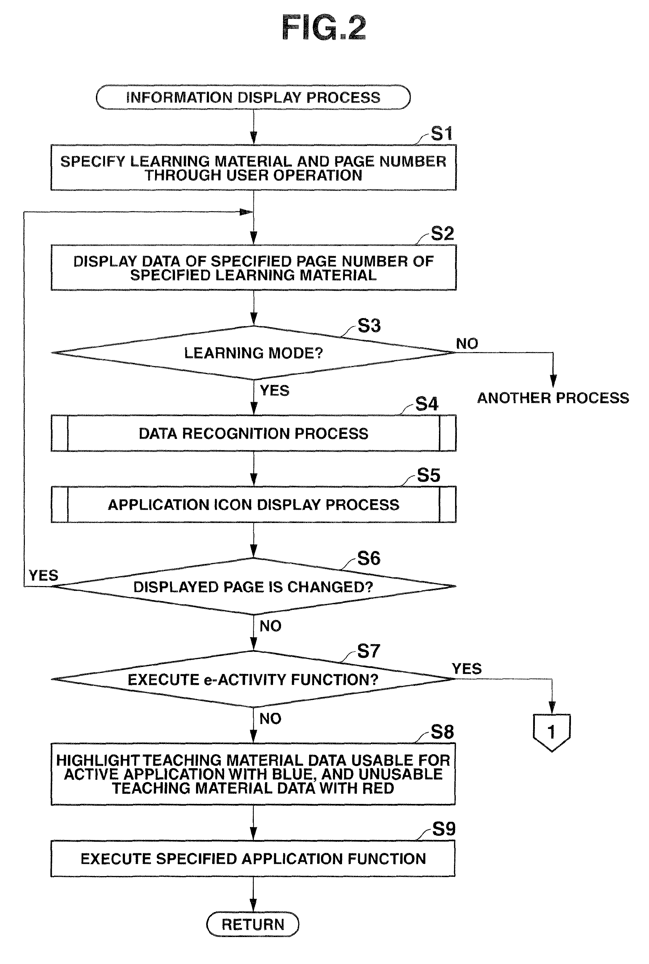

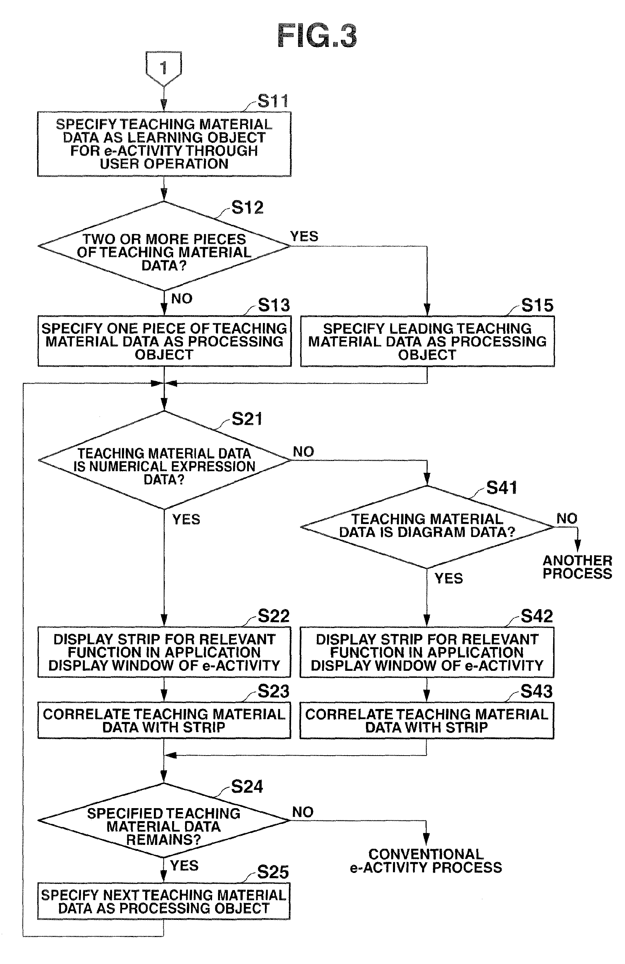

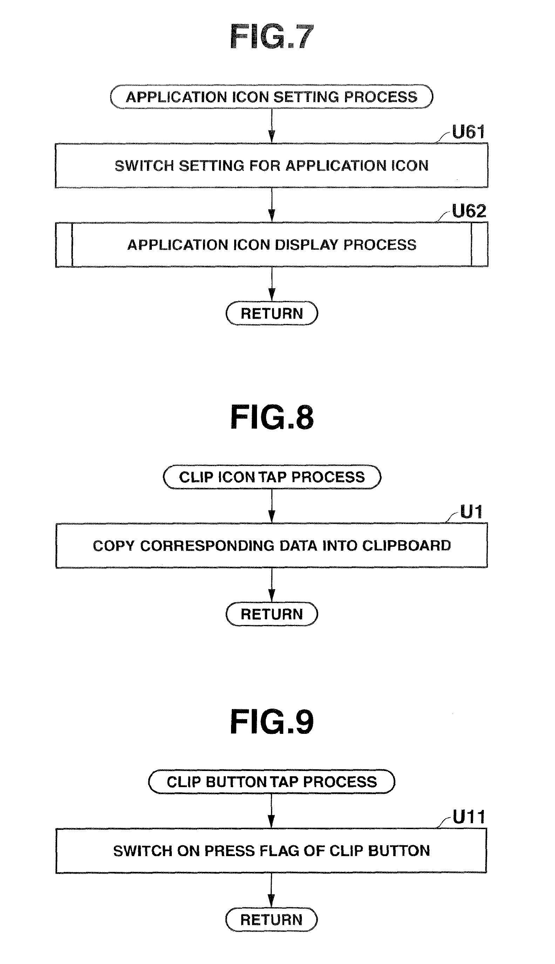

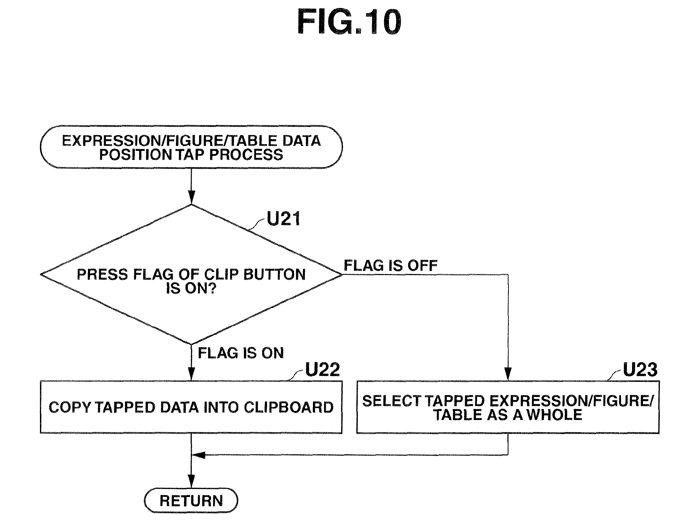

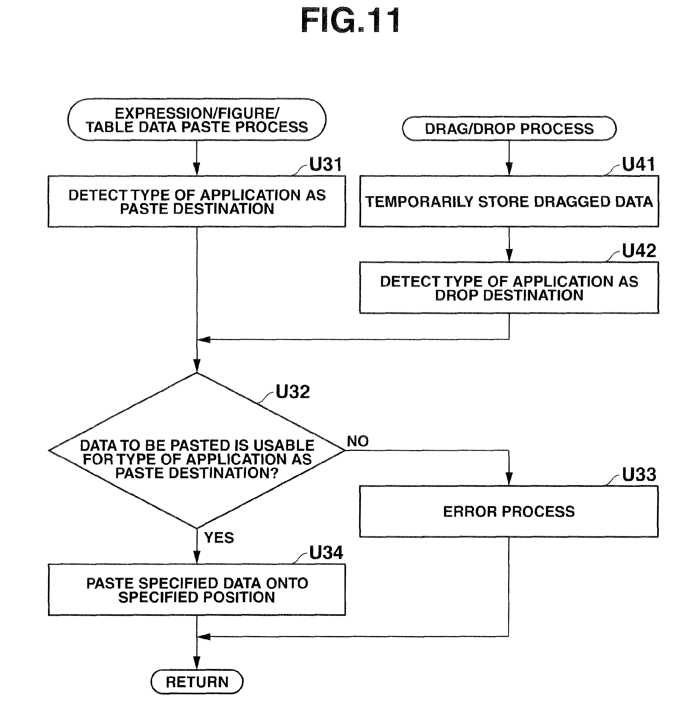

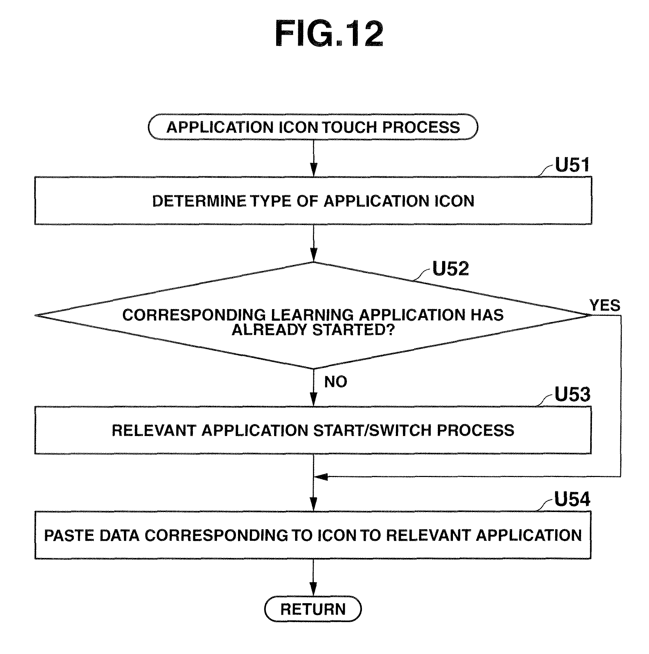

The information display program 240 allows the CPU 25 to execute an information display process (see FIGs. 2 and 3), an application icon setting process (see FIG. 7), a clip icon tap process (see FIG. 8), a clip button tap process (see FIG. 9), an expression/figure/table data position tap process (see FIG. 10), an expression/figure/table data paste process (see FIG. 11), a drag/drop process (see FIG. 11), and an application icon touch process (see FIG. 12), which will be described later.

The teaching material database 242 stores a plurality of learning material files F. Each learning material file F is electronic data for a textbook or a book used in a lecture, and includes at least one piece of teaching material data D in the embodiment. The teaching material data D can be input to application software for learning (hereinafter referred to as learning application G) in the learning application group 241, and includes numerical expression data, geometrical figure data, and table data in the embodiment. The numerical expression data may be expressed by a mathematical markup language, character data, or bitmap data.

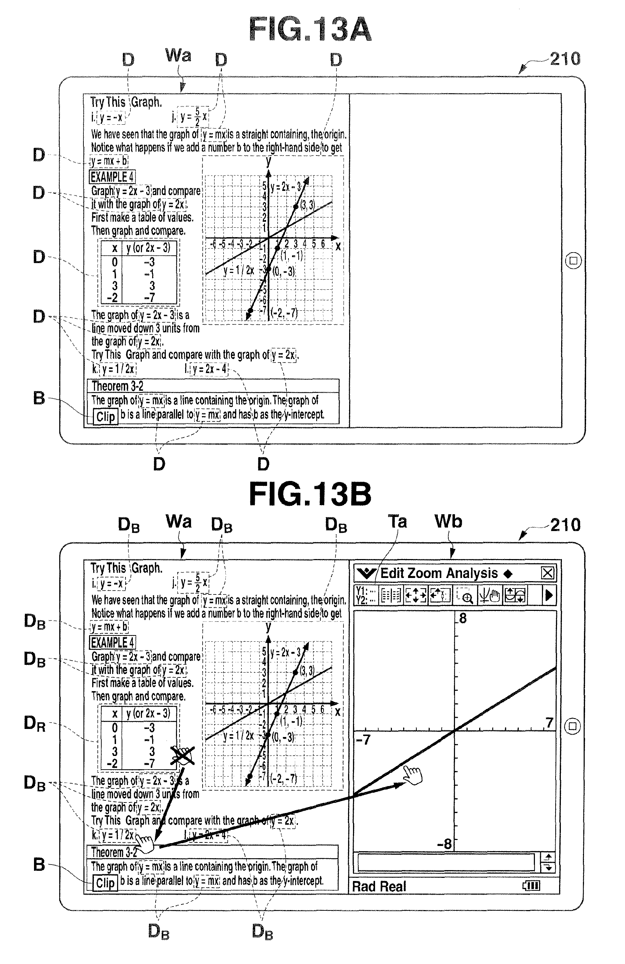

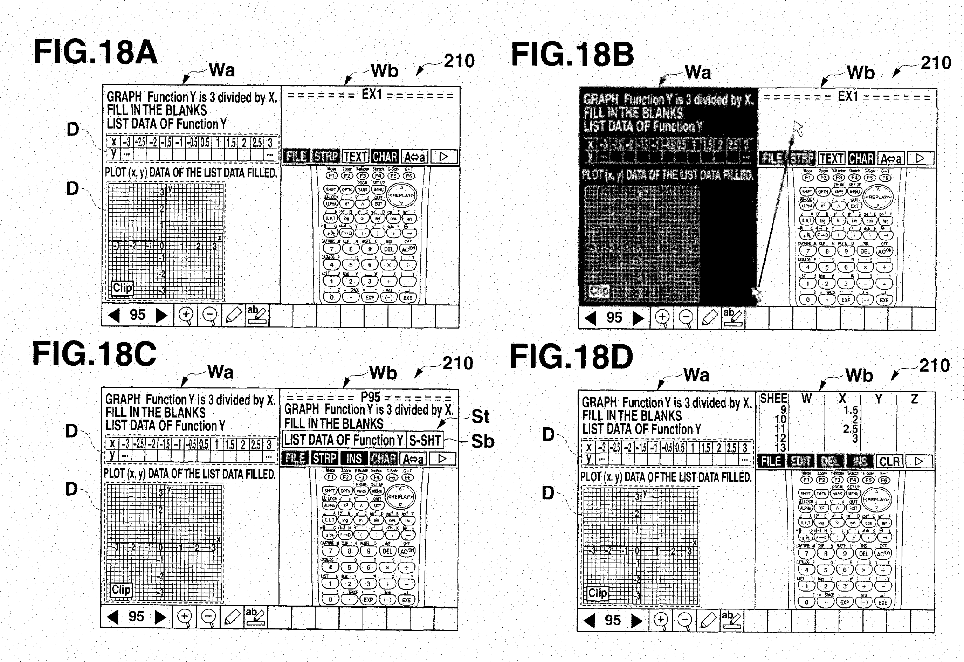

The learning application group 241 includes a plurality of types of learning applications G. Each learning application G is executed by the CPU 25 to achieve a specific function in a dedicated application display window Wb (refers to FIG. 13B). The functions achieved by the learning applications G include a function of inputting/editing a character string such as a numerical expression (hereinafter, referred to as main function); a function of drawing a graph of a numerical expression (hereinafter, referred to as graph function); a function of drawing a plane geometrical figure (hereinafter, referred to as figure function); a function of drawing a three-dimensional geometrical figure such as a perspective view (hereinafter, referred to as 3D figure function); a function of expanding a table (hereinafter, referred to as table function), and an e-ACTIVITY function. In particular, the e-ACTIVITY function disposes a strip St (see FIG. 18C) at a position corresponding to the position of teaching material data D within each of the learning applications G, which learning applications G includes the main function, the graph function, the figure function, the 3D figure function, or the table function. When a predetermined operation is performed on the strip St, the e-ACTIVITY function executes the learning application G corresponding to the strip St, and inputs teaching material data D corresponding to the strip St to the learning application G. The strip St is a belt-shaped display region which includes a spread button Sb. When the spread button Sb in the strip St is operated, a learning application G correlated with the strip St including the spread button Sb is executed; the teaching material data D correlated with the strip St is input to the learning application G, and the display content is updated.

The CPU 25 executes a process based on a predetermined program in response to a received instruction, and provides an instruction or transfers data to each functional unit to comprehensively control the data display apparatus 1. In detail, the CPU 25 reads a relevant program stored in the storage unit 24 in response to operational signals received from the input section 22, and executes the process in accordance with the read program. The CPU 25 then appropriately outputs the processing result to the display unit 21.

### [Operation]

### [Information Display Process]

An information display process executed by the data display apparatus 1 is now described with reference to FTGs. 2 and 3.

As shown in FIG. 2, the CPU 25 in the information display process receives information of a learning material file F and a page number thereof specified through a user operation (step S1).

The CPU 25 defines a teaching-material data display window Wa on the display 210 (see FIGs. 13A and 13B), and reads the specified learning material file F (file to be used for learning; hereinafter, referred to as learning file FS) from the storage unit 24, and then displays the data in the specified page number of the learning file FS in the teaching-material data display window Wa (step S2). As a result, a plurality of pieces of teaching material data D appears in the teaching-material data display window Wa.

The CPU 25 then determines whether the data display apparatus 1 is in a learning mode (step S3). If the CPU 25 determines that the data display apparatus 1 is not in the learning mode (step S3; NO), the CPU 25 shifts the process to another process. In the embodiment, the learning mode is switched to be "ON" or "OFF" in response to a user operation.

If the CPU 25 determines that the data display apparatus 1 is in the learning mode in step S3 (step S3; YES), the CPU 25 performs the data recognition process for the learning file FS (step S4).

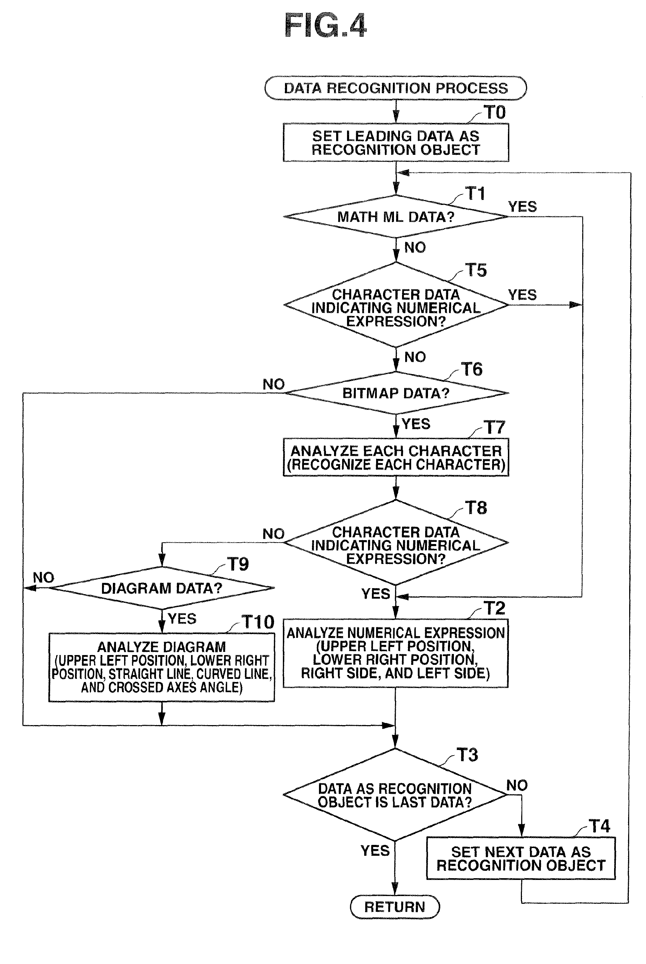

In detail, as shown in FIG. 4, the CPU 25 in this data recognition process sets the leading data in a displayed region of the learning file FS as a recognition object (step T0), and then determines whether the data as the recognition object is teaching material data D in a mathematical markup language (step T1) .

If the CPU 25 determines that the data as the recognition object is teaching material data D in the mathematical markup language in step T1 (step T1; YFS), the CPU 25 detects the upper left position and the lower right position of the numerical expression indicated by the teaching material data D, and detects the contents of the right and left sides of the numerical expression (step T2).

The CPU 25 then determines whether the data as the recognition object is the last data in the displayed region of the learning file FS (step T3). If the CPU 25 determines that the data as the recognition object is the last data (step T3; YES), the CPU 25 finishes the data recognition process.

If the CPU 25 determines that the data as the recognition object is not the last data in the displayed region of the learning file FS in step T3 (step T3; NO), the CPU 25 sets the next data in the displayed region of the learning file FS as a recognition object (step T4), and then shifts the process to step T1

If the CPU 25 determines that the data as the recognition object is not teaching material data D in the mathematical markup language in step T1 (step T1; NO), then the CPU 25 determines whether the data as the recognition object is teaching material data D of character data indicating a numerical expression (step T5).

If the CPU 25 determines that the data of the recognition object is the teaching material data D of a character data indicating a numerical expression (step T5; YES), the CPU 25 shifts the process to step T2.

If the CPL 25 determines that the data of the recognition object is not the teaching material data D of character data indicating a numerical expression (step T5; NO), then the CPU 25 determines whether the data as the recognition object is bitmap data (step T6).

If the CPU 25 determines that the data as the recognition object is not bitmap data in step T6 (step T6; NO), the CPU 25 shifts the process to step T3.

If the CPU 25 determines that the data as the recognition object is bitmap data in step T6 (step T6; YES), the CPU 25 analyzes a character string through character recognition of the bitmap data (step T7).

The CPU 25 then determines whether the data as the recognition object is teaching material data D of bitmap data indicating a numerical expression (step T8). If the CPU 25 determines that the data as the recognition object is the teaching material data D of bitmap data indicating a numerical expression (step T8; YES), the CPU 25 shifts the process to step T2.

If the CPU 25 determines that the data as the recognition object is not the teaching material data D of bitmap data indicating a numerical expression in step T8 (step T8; NO), then the CPU 25 determines whether the data as the recognition object is teaching material data D of bitmap data indicating a diagram (such as a graph, a table, or a figure) (step T9).

If the CPU 25 determines that the data as the recognition object is not the teaching material data D of bitmap data indicating a diagram in step T9 (step T9; NO), the CPU 25 shifts the process to step T3.

If the CPU 25 determines that the data as the recognition object is the teaching material data D of bitmap data indicating a diagram in step T9 (step T9; YES), the CPU 25 detects the upper left position and the lower right position of the diagram indicated by the teaching material data D, detects the content of the diagram (step T10), and then shifts the process to step T3. The content of the diagram includes a position of a straight line and a position of a curved line in a figure, and a crossed axes angle between lines.

After the data recognition process, as shown in FIG. 2, the CPU 25 performs an application icon display process (step S5).

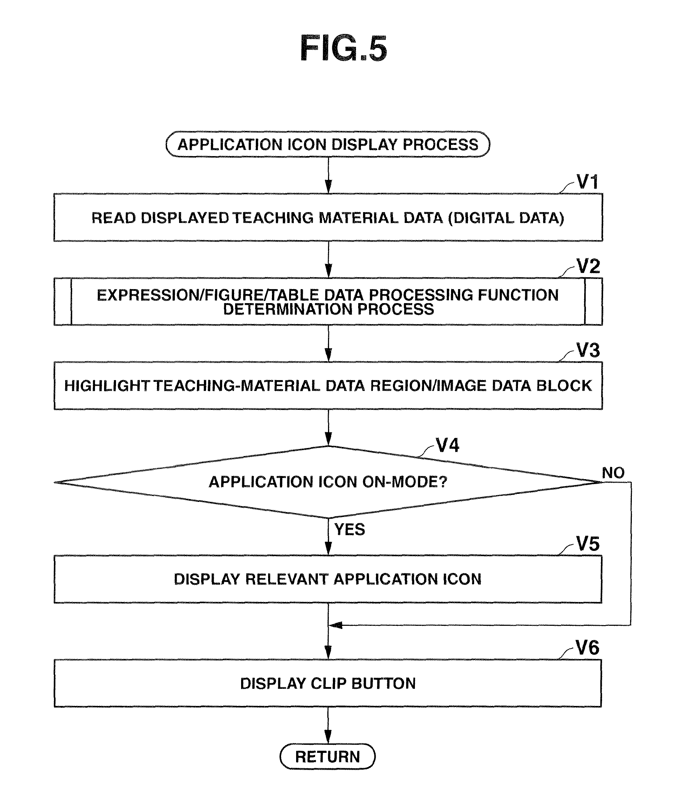

In detail, as shown in FIG. 5, the CPU 25 in this application icon display process reads each piece of teaching material data D contained in a displayed region of a learning file FS (step VI), and then performs an expression/figure/table data processing function determination process (hereinafter referred to as simply "function determination process) for determining the type of a learning application G (hereinafter, referred to as available application GC) for which the teaching material data D is usable (step V2).

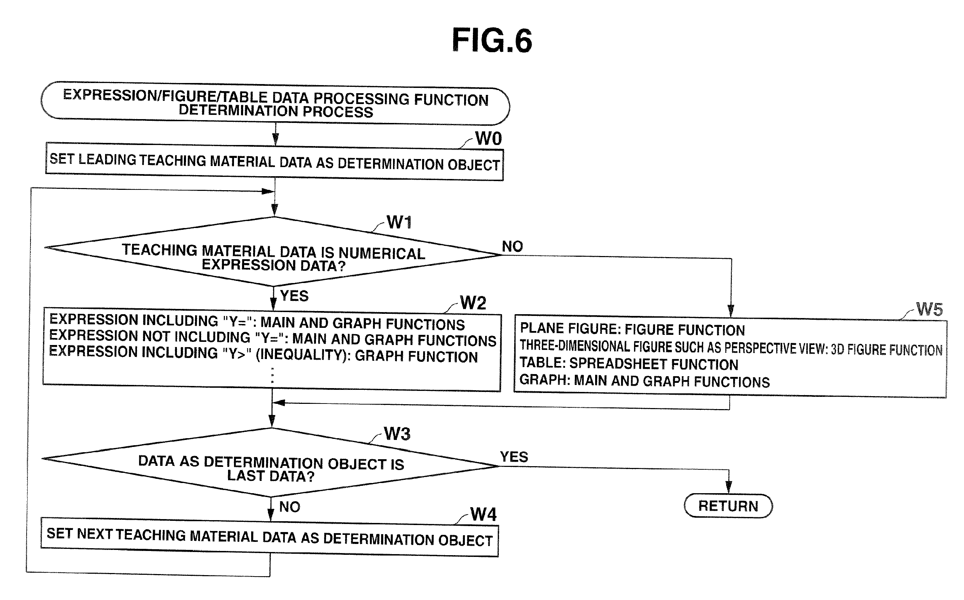

As shown in FIG. 6, the CPU 25 in the function determination process sets the leading teaching material data D as a determination object (step W0), and then determines whether the teaching material data D as the determination object is data indicating a numerical expression (step M1).

If the CPU 25 determines that the teaching material data D as the determination object expresses a numerical expression (step W1; YES), then the CPU 25 determines the learning applications G for the main function and the graph function to be available applications GC when the numerical expression includes "Y="; determines the learning application G for the graph function to be an available application GC when the numerical expression includes "Y>"; or determines the learning applications G for the main function and the graph function to be available applications GC when the numerical expression includes neither "Y=" nor "Y>" (step W2).

The CPU 25 then determines whether the teaching material data D as the determination object is the last data (step W3). If the CPU 25 determines that the teaching material data D is the last data (step W3; YES), the CPU 25 finishes the function determination process.

If the CPU 25 determines that the teaching material data D as the determination object is not the last data (step W3; NO), the CPU 25 sets the next teaching material data D as the determination object (step W4), and then shifts the process to step M1.

If the CPU 25 determines that the teaching material data D as the determination object does not express a numerical expression (step M1; NO), then the CPU 25 determines the learning application G for a figure function to be an available application GC when the teaching material data D is the data of a plane geometrical figure; determines the learning application G for a 3D figure function to be an available application GC when the teaching material data D is the data of a three-dimensional geometrical figure; determines the learning application G for a table function to be an available application GC when the teaching material data D is the data of a table; or determines the learning applications G for the main function and the graph function to be available applications GC when the teaching material data D is the data of a graph (step W5), and the CPU 25 then shifts the process to step W3.

After the function determination process, as shown in FIG. 5, the CPU 25 then highlights each piece of teaching material data D in the learning file FS displayed on the teaching-material data display window Wa (step V3).

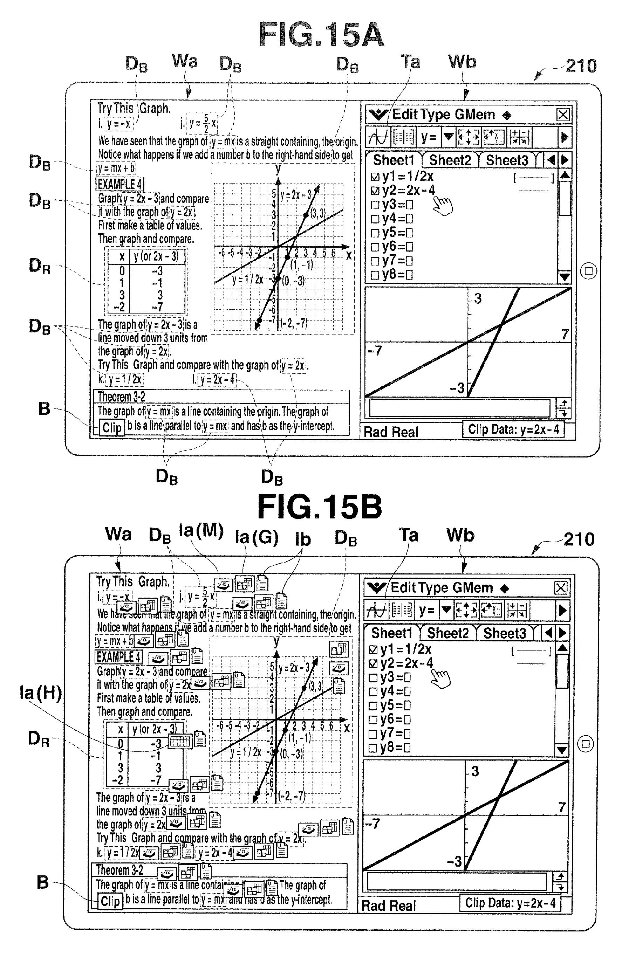

The CPU 25 then determines whether the data display apparatus 1 is in a display-ON mode where an application icon Ia is displayed (see FIG. 15B) after an application icon setting process (see FIG. 7) described below (step V4). If the CPU 25 determines that the data display apparatus 1 is not in the display-ON mode (step V4; NO), the CPU 25 shifts the process to step V6 described below. The application icon Ia indicates the type of an available application GC for teaching material data D.

If the CPU 25 determines that the data display apparatus 1 is in the display-ON mode where an application icon Ia is displayed in step V4 (step V4; YES), the CPU 25 displays the application icon Ia for the available application GC for each piece of the teaching material data D displayed in the teaching-material data display window Wa, with the application icon Ia and each piece of the teaching material data D being associated with each other (step V5). In the embodiment, each application icon Ia appears near the corresponding teaching material data D.

The CPU 25 then displays a clip button B (see FIGs. 13A and 13B) at a lower end of the teaching-material data display window Wa (step V6), and finishes the application icon display process. In this operation, the CPU 25 may further display a clip icon Ib (see FIG. 15B) in association with each piece of teaching material data D displayed on the teaching-material data display window Wa.

The clip button B switches the processes to be performed upon a tap operation to the teaching material data D in the teaching-material data display window Wa. In detail, the clip button B switches between the following two processes: one is temporarily storing the teaching material data D as a tap object in a clip board (not shown) of the storage unit 24; and the other is allowing the teaching material data D as a tap object to be in a selected state. The clip icon Ib is operated in order to copy and temporarily store the teaching material data D in the clip board, with the teaching material data D being displayed in association with the clip icon Ib in the teaching-material data display window Wa. In the embodiment, each clip icon Ib appears near the corresponding teaching material data D.

After the application icon display process, as shown in FIG. 2, the CPU 25 then determines whether a displayed page of the learning file FS is changed (step S6). If the CPU 25 determines that the page is changed (step S6; YES), the CPU 25 shifts the process to step S2.

If the CPU 25 determines that the displayed page of the learning file FS is not changed in step S6 (step S6; NO), then the CPU 25 determines whether the learning application G for the e-ACTIVITY function is active (step S7). The embodiment is described under assumption that at least any one of the learning applications G has already been started at step S7. In this state, if at least one of the learning applications G stored in the storage unit 24 starts in response to a user operation, an application display window Wb (see FIG. 13B) for each of the started learning applications G appears on the display 210, and an execution screen of each of the learning applications G appears in the application display window Wb. If only one learning application G starts, the learning application G is set to be active. If a plurality of learning applications G start, a learning application G specified by a user operation is set to be active.

If the CPU 25 determines that the learning application G for the e-ACTIVITY function is not active in step S7 (step S7; NO), the CPU 25 highlights each piece of teaching material data D, which is usable for a currently active learning applications G, with blue; and highlights each piece of unusable teaching material data D with red, among the various types of teaching material data D displayed on the teaching-material data display window Wa (step S8). Then, the CPU 25 executes the function of the active learning application G on the basis of a user operation, and updates the displaying content on the display 210 (step S9). In the process of step S8, the CPU 25 may distinguish the usable teaching material data D from the unusable teaching material data D in another manner as ling as the teaching material data D usable for the currently active learning application G is distinguished from the unusable teaching material data D, among the various pieces of teaching material data D displayed on the teaching-material data display window Wa. For example, a display pattern of a pointer may be changed depending on whether the pointer is on the usable teaching material data D or on the unusable teaching material data D. The process of step S9 is described in detail below.

If the CPU 25 determines that the learning application G for the e-ACTIVITY function is active in step S7 (step S7; YES), as shown in FIG. 3, the CPU 25 specifies each piece of teaching material data D contained in a specified region as the learning object for the e-ACTIVITY function on the basis of a user operation of specifying a region within the teaching-material data display window Wa, and copies text data (excluding numerical expressions) contained in the specified region into the application display window Wb to display the text data (step S11). The embodiment is described under assumption that at least one piece of teaching material data D is contained in the specified region.

The CPU 25 then checks for the number of pieces of teaching material data D as the learning objects (step S12). If the CPU 25 determines that the number is one (step S12; NO), the CPU 25 specifies the one teaching material data D as a processing object (step S13), and then shifts the process to step S21.

if the CPU 25 determines that the number of pieces of teaching material data D as the learning objects is two or more (step S12; YES), the CPU 25 specifies the leading teaching material data D as a processing object (step S15).

The CPU 25 then determines whether the teaching material data D as the processing object is data of a numerical expression (step S21) . If the CPU 25 determines that the teaching material data D is data of a numerical expression (step S21; YES), the CPU 25 displays a strip St (see FIG. 18C) for an available application GC for the teaching material data D at a position corresponding to the position of the teaching material data D in the text data displayed on the application display window Wb (a position in the application display window Wb corresponding to the position of the teaching material data D in the learning file FS) (step S22), and correlates the teaching material data D as the processing object with the strip St (step S23).

The CPU 25 then determines whether teaching material data D as the learning object remains (step S24). If the CPU 25 determines that the teaching material data D does not remain (step S24; NO), the CPU 25 executes a publicly-known e-ACTIVITY function on the basis of a user operation. Here, when a spread button Sb in the strip St is operated, the CPU 25 executes a learning application G correlated with the strip St including the spread button Sb in the application display window Wb for the e-ACTIVITY function, and inputs the teaching material data D correlated with the strip St to the learning application G.

If the CPU 25 determines that the teaching material data D as the learning object still remains in step S24 (step S24; YES), the CPU 25 specifies next teaching-material data as a processing object (step S25), and then shifts the process to step S21.

If the CPU 25 determines that the teaching material data D as the processing object is not data of a numerical expression in step S22 (step S21; NO), the CPU 25 then determines whether the teaching material data D as the processing object is data of a diagram (such as a graph, a table, or a figure) (step S41). If the CPU 25 determines that the teaching material data D is not data of a diagram (step S41; NO), the CPU 25 shifts the process to another process.

If the CPU 25 determines that the teaching material data D as the processing object is data of a diagram in step S41 (step S41; YES), the CPU 25 displays a strip St for an available application GC for the teaching material data D at a position corresponding to the position of the teaching material data D in the text data displayed on the application display window Wb (a position in the application display window Wb corresponding to the position of the teaching material data D in the learning file FS) (step S42), correlates the teaching material data D as the processing object with the strip St (step S43), and shifts the process to step S24.

### [Learning-Application-Function Execution Process]

The function execution process for the learning application G executed in step S9 will now be described with reference to the drawings. In the embodiment, the function execution process for the learning application G includes an application icon setting process (see FIG. 7), a clip icon tap process (see FIG. 8), a clip button tap process (see FIG. 9), an expression/figure/table data position tap process (see FIG. 10), an expression/figure/table data paste process (see FIG. 11), a drag/drop process (see FIG. 11), and an application icon touch process (see FIG. 12), each of which is executed in response to a user operation. The following description focuses on these processes.

### (Application Icon Setting Process)

The application icon setting process is executed through switching of the setting for an application icon Ia by a user during the function execution process for the learning application G.

As shown in FIG. 7, the CPU 25 in the application icon setting process switches the display mode of the application icon Ia to be "ON" or "OFF" in response to a user operation (step U61), and then executes the application icon display process described above (step U62).

### (Clip Icon Tap Process)

The clip icon tap process is executed through a user operation of touching a clip icon Ib during the function execution process for the learning application G.

As shown in FIG. 8, the CPU 25 in the clip icon tap process copies the teaching material data D corresponding to the touched clip icon Ib into a clip board (not shown) to temporarily store the data D in the clip board (step U1), and then finishes the clip icon tap process.

### (Clip Button Tap Process)

The clip button tap process is executed through a user operation of touching a clip icon B during the function execution process for the learning application G.

As shown in FIG. 9, the CPU 25 in the clip button tap process switches the press flag of the clip icon B to be "ON" or "OFF" (step U11), and then finishes the clip button tap process. The ON/OFF state of the press flag of the clip icon B is stored in the storage unit 24.

### (Expression/Figure/Table Data Position Tap Process)

The expression/figure/table data position tap process is executed through a user operation of touching a position of teaching material data D during the function execution process for the learning application G.

As shown in FIG. 10, the CPU 25 in the expression/figure/table data position tap process checks for the ON/OFF state of the press flag of the clip icon B after the clip button tap process described above (step U21).

If the CPU 25 determines that the press flag of the clip icon B is "ON" in step U21 (step U21; ON), the CPU 25 copies the tapped teaching material data D into the clip board to temporarily store the data D in the clip board (step U22), and then finishes the expression/figure/table data position tap process.

If the CPU 25 determines that the press flag of the clip icon B is "OFF" in step U21 (step U21; OFF), the CPU 25 sets the tapped teaching material data D to a selected state (step U23), and then finishes the expression/figure/table data position tap process.

### (Expression/Figure/Table Data Paste Process)

The expression/figure/table data paste process is executed through a user operation of pasting teaching material data D into the application display window Wb during the function execution process for the learning application G.

As shown in FIG. 11, the CPU 25 in the expression/figure/table data paste process detects the type of the learning application G as a paste destination (the learning application G specified through the paste operation) (step U31), and then determines whether the teaching material data D to be pasted, which is temporality stored in the clip board, is usable for the learning application (step U32).

If the CPU 25 determines that the teaching material data D to be pasted is unusable for the learning application in step U32 (step U32; NO), the CPU 25 displays an error message indicating such a determination on the display 210 (step U33), and then finishes the expression/figure/table data paste process.

If the CPU 25 determines that the teaching material data D to be pasted is usable for the learning application G in step U32 (step U32; YES), the CPU 25 pastes the teaching material data D to be pasted onto a specified position in the application display window Wb and updates the displaying content on the display 210 (step U34), and then finishes the expression/figure/table data paste process.

### (Drag/Drop Process)

The drag/drop process is executed through a user operation of dragging/dropping the teaching material data D from the teaching-material data display window Wa into the application display window Wb during the function execution process for the learning application G.

As shown in FIG. 11, the CPU 25 in the drag/drop process temporarily stores the dragged teaching material data D in the clip board (step U41), and detects the type of the learning application G as a drop destination (learning application G specified through the drop operation) (step U42), and then shifts the process to step U32.

### (Application Icon Touch Process)

The application icon touch process is executed through a user operation of touching an application icon Ia during the function execution process for the learning application G. In the embodiment, when the user operation of touching the application icon Ia is performed, the CPU 25 specifies the teaching material data D corresponding to the application icon Ia, or specifies each of the teaching material data D and the learning application G corresponding to the application icon Ia.

As shown in FIG. 12, the CPU 25 in the application icon touch process detects the type of the touched application icon Ia (step U51), and then determines whether the learning application G corresponding to the application icon Ia has already been started to be active (step U52).

If the CPU 25 determines that the learning application G is active in step U52 (step U52; YES), the CPU 25 shifts the process to step U54.

If the CPU 25 determines that the learning application G is not active in step U52 (step U52; NO), the CPU 25 activates the learning application G, and updates the displaying content on the display 210 (step U53).

The CPU 25 then inputs the teaching material data D corresponding to the touched application icon Ia, namely, the teaching material data D specified through the user operation of touching the application icon Ia, to the active learning application G and updates the displaying content on the display 210 (step U54), and then finishes the application icon touch process.

### [Exemplary Operations]

The information display process and the function execution process for the learning application G will now be described in detail with reference to the drawings. In the drawings seen in the following exemplary operations, a plurality of pieces of teaching material data D are each enclosed by a broken line, but hatching on the teaching material data D is omitted in the teaching-material data display window Wa. In the drawings, the subscript "B" of the symbol "D" for teaching material data D indicates hatching (highlighting) of the teaching material data D with blue. Similarly, the subscript "R" of the symbol "D" for teaching material data D indicates hatching (highlighting) of the teaching material data D with red.

### (First Exemplary Operation)

As shown in FIG. 13A, a user specifies a learning material file F for a math textbook and a page number thereof (step S1). In response to this operation, the teaching-material data display window Wa appears on the display 210, and the data of the specified page number of the specified learning file FS appears in the teaching-material data display window Wa (step S2). As a result, a plurality of pieces of teaching material data D appears in the teaching-material data display window Wa.

The CPU 25 then determines that the data display apparatus 1 is in the learning mode (step S3; YES), and detects the position and the content of each piece of teaching material data D in the displayed region of the learning file FS (step S4).

The CPU 25 then reads each piece of teaching material data D contained in the displayed region of the learning file FS (step V1), and then sets the leading teaching-material data D as a determination obj ect (step W0). The CPU 25 then determines that the teaching material data D as the determination object indicates a numerical expression "y=-x" (step W1; YES), and determines the learning applications G for the main function and the graph function to be available applications GC (step W2).

The CPU 25 then determines that the teaching material data D as the determination object is not the last data (step W3; NO), and then sets the next teaching material data D as the determination object (step W4). The CPU 25 then determines that the teaching material data D as the determination object expresses a numerical expression "y=5/2 ·x" (step W1; YES), and determines the learning applications G for the main function and the graph function to be available applications GC (step W2).

Similarly, the CPU 25 determines that the teaching material data D as the determination object is not the last data (step W3; NO), and then sets the next teaching material data D as the determination object (step W4), and determines the type of the available application GC for each piece of teaching material data D.

The CPU 25 then highlights each piece of teaching material data D in the learning file FS displayed on the teaching-material data display window Wa (step V3).

The clip button B then appears at a lower end of the teaching-material data display window Wa (step V6). In this state, the data display apparatus 1 in the first exemplary operation is not in the display-ON mode where an application icon Ia is displayed.

As shown in FIG. 13B, a user starts a learning application G for the graph function. In response to this operation, an execution screen for the learning application G appears in the application display window Wb for the learning application G. In addition, each piece of teaching material data D (here, teaching material data D of a numerical expression and of a graph) usable for an active learning application G is highlighted with blue, and each piece of unusable teaching material data D (here, teaching material data D of a table) is highlighted with red, among various pieces of teaching material data D displayed on the teaching-material data display window Wa (step S8). In the first exemplary operation, a switching tab Ta appears in the application display window Wb for the learning application G for the graph function in order to switch between display of a graph and display of a numerical expression for the graph. FIG. 13B shows a state where a graph is selected.

The user then drags and drops the teaching material data D of a table from the teaching-material data display window Wa into the application display window Wb. In response to this operation, the CPU 25 temporarily stores the dragged teaching material data D in a clip board (step U41), and detects the type (graph function) of the learning application G as a drop destination (step U42). The CPU 25 then determines that the teaching material data D to be pasted is unusable for the learning application G as the drop destination (step U32; NO), and displays an error message (here, the mark X on a pointer) indicating such a determination on the display 210 (step U33).

Alternatively, the user drags and drops teaching material data D of a numerical expression "y=1/2·x" from the teaching-material data display window Wa into the application display window Wb. In response to this operation, the CPU 25 temporarily stores the dragged teaching material data D in the clip board (step U41), and detects the type (graph function) of the learning application G as a drop destination (step U42). The CPU 25 then determines that the teaching material data D to be pasted is usable for the learning application G as the drop destination (step U32; YES), and pastes the teaching material data D to be pasted onto a specified position in the application display window Wb and updates the displaying content on the display 210 (step U34).

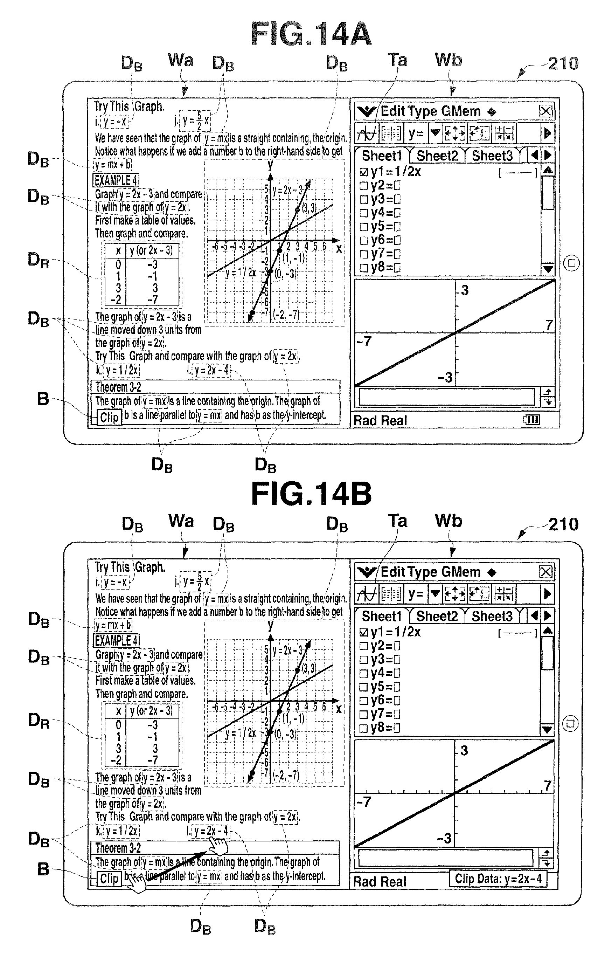

The user then selects the numerical expression for a graph to be displayed through operating the switching tab Ta. In response to this operation, as shown in FIG. 14A, the numerical expression "y=1/2 ·x" appears in the application display window Wb.

As shown in FIG. 14B, the press flag of the clip button B is then switched to be "ON" through a user operation of touching the clip button B (step U11). The user then touches the position of the teaching material data D of a numerical expression "y=2x-4", and the CPU 25 determines that the press flag of the clip icon B is "ON" (step U21; ON), and copies the tapped teaching material data D into the clip board to temporarily store the data D in the clip board. In the first exemplary operation, the content of the clip board appears in a lower right portion of the display 210.

The user then pastes the teaching material data D into the application display window Wb, and the CPU 25 detects the type of the learning application G as a paste destination (the learning application G for the graph function) (step U31). The CPU 25 then determines that the teaching material data D to be pasted (the teaching material data D of the numerical expression "y=2x-4"), which is temporality stored in the clip board, is usable for the learning application (step U32; YES). In addition, as shown in FIG. 15A, the CPU 25 pastes the teaching material data D to be pasted onto a specified position in the application display window Wb and updates the displaying content on the display 210 (step U34).

The user then switches setting for the application icon Ia. In response to this operation, the CPU 25 switches the display mode of the application icon Ia to be "ON" (step U61). The CPU 25 then reads each piece of teaching material data D contained in the displayed region of the learning file FS (step V1), and determines the type of the available application GC for each piece of teaching material data D (step V2).

As shown in FIG. 15B, the CPU 25 then highlights each piece of teaching material data D in the learning file FS displayed on the teaching-material data display window Wa (step V3). The CPU 25 then determines that the data display apparatus 1 is in the display-ON mode where an application icon Ia is displayed (step V4; YES), and displays the application icon Ia for the available application GC for each piece of the teaching material data D displayed in the teaching-material data display window Wa, with the application icon Ia and each piece of the teaching material data D being associated with each other (step V5). In the drawings, the subscript "M" of the symbol "Ia" for the application icon Ia indicates that the application icon Ia corresponds to the learning application G for the main function. Similarly, the subscript "G", "2Z", "3Z", and "H" of the symbols "Ia" for the application icons Ia indicate that the application icons Ia correspond to the learning applications G for the graph function, the figure function, the 3D figure function, and the table function, respectively.

A clip button B then appears at a lower end of the teaching-material data display window Wa (step V6), and a clip icon Ib appears in association with each piece of teaching material data D in the teaching-material data display window Wa.

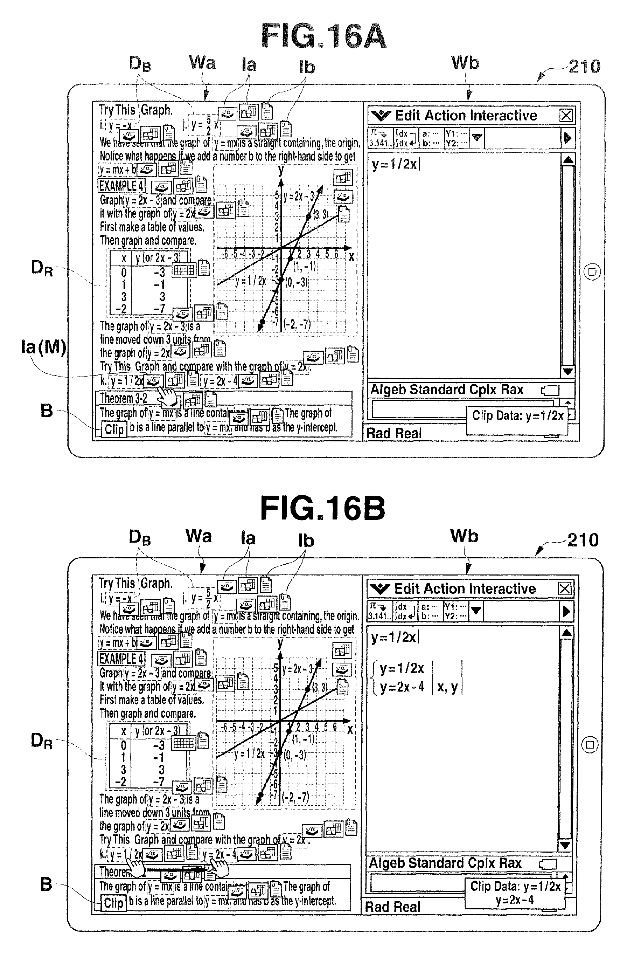

As shown in FIG. 16A, the user then touches the application icon Ia for the main function for the teaching material data of the numerical expression "y=1/2·x", and the CPU 25 detects the type of the touched application icon Ia (step U51), and determines that the learning application G corresponding to the application icon is active, and updates the displaying content on the display 210 (step U53).

The CPU 25 then inputs teaching material data D corresponding to the touched application icon Ia (the teaching material data D of the numerical expression "y=1/2 ·x") to the active learning application G and updates the displaying content on the display 210 (step U54).

As shown in FIG. 16B, the user then touches the position of the teaching material data D of the numerical expression "y=1/2 ·x". In response to this operation, the CPU 25 determines that the press flag of the clip icon B is "ON" (step U21; ON), and copies the tapped teaching material data D into the clip board to temporarily store the data D in the clip board. A user then pastes the teaching material data D into the application display window Wb. In response to this operation, the CPU 25 detects the type of the learning application G as a paste destination (the learning application G for the main function) (step U31). The CPU 25 then determines that the teaching material data D to be pasted (the teaching material data D of the numerical expression "y=1/2·x"), which is temporality stored in the clip board, is usable for the learning application G (step U32; YES), and pastes the teaching material data D to be pasted onto a specified position in the application display window Wb and updates the displaying content on the display 210 (step U34).

Similarly, the user touches a position of the teaching material data D of the numerical expression "y=2x-4". In response to this operation, the CPU 25 determines that the press flag of the clip icon B is "ON" (step U21; ON), and copies the tapped teaching material data D into the clip board to temporarily store the data D in the clip board. A user then pastes the teaching material data D into the application display window Wb. In response to this operation, the CPU 25 detects the type of the learning application G as a paste destination (the learning application G for the main function) (step U31). The CPU 25 then determines that the teaching material data D to be pasted (the teaching material data D of the numerical expression "y=2x-4"), which is temporality stored in the clip board, is usable for the learning application G (step U32; YES), and pastes the teaching material data D to be pasted onto a specified position in the application display window Wb and updates the displaying content on the display 210 (step U34). In the first exemplary operation, the numerical expressions "y=1/2·x" and "y=2x-4" are input to the learning application G for the main function in the form of simultaneous equations.

### (Second Exemplary Operation)

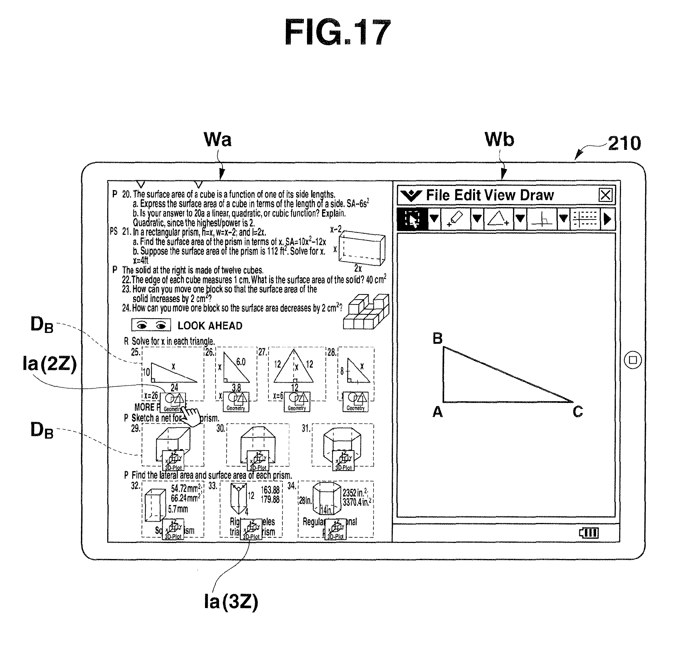

As shown in FIG. 17, a user specifies a learning material file F for a math textbook and a page number thereof (step S1). In response to this operation, the teaching-material data display window Wa appears on the display 210, and the data of the specified page number of the specified learning file FS appears in the teaching-material data display window Wa (step S2). As a result, a plurality of pieces of teaching material data D appears in the teaching-material data display window Wa.

The CPU 25 then determines that the data display apparatus 1 is in the learning mode (step S3; YES), and detects the position and the content of each piece of teaching material data D in the displayed region of the learning file FS (step S4).

The CPU 25 then reads each piece of teaching material data D contained in the displayed region of the learning file FS (step V1), and then sets the leading teaching-material data D as a determination objects (step W0). The CPU 25 then determines that the teaching material data D as the determination object indicates a plane figure, and determines the learning application G for the figure function to be an available application GC (step W2).

Similarly, the CPU 25 determines that the teaching material data D as the determination object is not the last data (step W3; NO), and then sets the next teaching material data D as the determination object (step W4), and determines the type of the available application GC for each piece of teaching material data D.

The CPU 25 then highlights each piece of teaching material data D in the learning file FS displayed on the teaching-material data display window Wa (step V3).

The CPU 25 then determines that the data display apparatus 1 is in the display-ON mode where an application icon Ia is displayed (step V4; YES), and displays the application icon Ia for the available application GC for each piece of the teaching material data D displayed in the teaching-material data display window Wa, with the application icon Ia and each piece of the teaching material data D being associated with each other (step V5), and displays a clip button B at a lower end of the teaching-material data display window Wa (step V6).

The user then touches an application icon Ia for the figure function for the teaching material data of a right-angled triangle, and the CPU 25 detects the type of the touched application icon Ia (step U51), and determines that the learni;g application G (the learning application G for the figure function) corresponding to the application icon is active, and updates the displaying content on the display 210 (step U53).

The CPU 25 then inputs teaching material data D corresponding to the touched application icon Ia (the teaching material data D of the right-angled triangle) to the active learning application G (application G for the figure function) and updates the displaying content on the display 210 (step U54).

### (Third Exemplary Operation)

As shown in FIG. 18A, a user specifies a learning material file F for a math textbook and a page number 95 thereof (step S1). In response to this operation, the teaching-material data display window Wa appears on the display 210, and the data of the specified page number of the specified learning file FS appear in the teaching-material data display window Wa (step S2) As a result, a plurality of pieces of teaching material data D appears in the teaching-material data display window Wa.

The CPU 25 then determines that the data display apparatus 1 is in the learning mode (step S3; YES), and detects the position and the content of each piece of teaching material data D in the displayed region of the learning file FS (step S4).

The CPU 25 then reads each piece of teaching material data D contained in the displayed region of the learning file FS (step V1), and then sets the leading teaching-material data D as a determination object (step W0). The CPU 2 then determines that the teaching material data D as the determination object indicates a table (step W1; YES), and determines the learning application G for the table function to be an available application GC (step W2).

Similarly, the CPU 25 determines that the teaching material data D as the determination object is not the last data (step W3; NO), and then sets the next teaching material data D as the determination object (step W4), and determines the type of the available application GC for each piece of teaching material data D.

The CPU 25 then highlights each piece of teaching material data D in the learning file FS displayed on the teaching-material data display window Wa (step V3).

The CPU 25 then displays the clip button B at a lower end of the teaching-material data display window Wa (step V6). In this state, the data display apparatus 1 in the third exemplary operation is not in the display-ON mode where an application icon Ia is displayed.

The user then starts the learning application G for the graph function. In response to this operation, an execution screen of the learning application G appears in the application display window Wb for the learning application G, and the CPU 25 determines that the learning application G for the e-ACTIVITY function is active (step S7; YES).

As shown in FIG. 18B, the user then specifies a region in the teaching-material data display window Wa. In response to this operation, the CPU 25 specifies each piece of teaching material data D contained in the specified region as the learning objects for the e-ACTIVITY function while the copy of text data (excluding numerical expressions) contained in the specified region appears on the application display window Wb (step S11).

The CPU 25 then determines that the number of pieces of teaching material data D as the learning objects is two or more (step S12; YES), and specifies the leading teaching-material data D (the teaching material data D of a table) as a processing object (step S15).

The CPU 25 then determines that the teaching material data D as the processing object is data of a diagram (step S41; YES) . As shown in FIG. 18C, the CPU 25 then displays the strip St for the available application GC (the learning application G for a table) for the teaching material data D at a position corresponding to the position of the teaching material data D in the text data displayed on the application display window Wb (step S42), and correlates the teaching material data D (the teaching material data D of a table) to be processed with the strip St (step S43).

Similarly, the CPU 25 specifies the next teaching material data D as a processing object, then displays the strip St for the available application GC for the teaching material data D, and correlates the teaching material data D as the processing object with the strip St. FIG. 18C shows the strip St only for the loading teaching-material data D for convenience.

The user then operates the spread button Sb in the strip St. In response to this operation, as shown in FIG. 18D, the learning application G (the learning application G for a table) correlated with the strip St including the spread button Sb is executed in the application display window Wb for the e-ACTIVIiY function, the teaching material data D (the teaching material data D of a table) correlated with the strip St is input to the learning application G, and the display object is updated.

As described above, as shown in steps V1 to V5 of FIG. 5, steps W0 to W5 of FIG. 6, and FIG. 15B, the data display apparatus 1 of the embodiment detects the type of the available application GC, for which each piece of the teaching material data D displayed on the teaching-material data display window Wa is usable, among a plurality of types of learning applications G; displays the type of the available application GC for each piece of the teaching material data D displayed in the teaching-material data display window Wa, with the type of the available application GC and each piece of the teaching material data D being associated with each other. As a result, which teaching material data is usable for which learning application is clearly displayed. This allows a user to readily understand the correspondence between teaching material data D and a learning application G.

As shown in steps U51 to U54 of FIG. 12 and FIG. 16A, if the CPU 25 specifies one piece of teaching material data D displayed on the teaching-material data display window Wa and the available application GC for the teaching material data D on the basis of a user operation of touching an application icon Ia, the specified available application GC is executed to display an execution screen, and the specified teaching material data D is input to the available application GC. As a result, the displayed teaching material data D can be readily input to the available application GC for the teaching material data D.

As shown in step S8 of FIG. 2 and FIG. 13B, if a learning application G specified on the basis of a user operation is executed, the execution screen for the learning application G appears, and the teaching material data D usable for the learning application G is distinguishably displayed among the a plurality of pieces of teaching material data D displayed on the teaching-material data display window Wa. As a result, which teaching material data is usable for which learning application is clearly displayed. This allows a user to readily understand the correspondence between teaching material data D and a learning application G.

As shown in step U34 of FIG. 11 and FIG. 13B, if one piece of teaching material data D displayed on the teaching-material data display window Wa is specified, the specified reaching material data D is input to the learning application G specified by a user. As a result, the displayed teaching material data D can be readily input to the learning application G.

As shown in step U33 of FIG. 11 and FIG. 13B, if the specified teaching material data D is unusable for the learning application G specified by a user, a message indicating such a state is displayed. This can prevent the unusable teaching material data D from being input to the learning application G.

As shown in steps S22 and S42 of FIG. 3 and FIG. 18C, if a region of a content displayed on the teaching-material data display window Wa is specified, which specified region includes at least one piece of teaching material data D, on the basis of a user operation, the text data within the specified region appears in the application display window Wb for the e-ACTIVITY function, and the type of the available application GC, for which each piece of the specified data D in the specified region is usable, is detected, and the spread button Sb (execution button) for the available application GC for the teaching material data D appears at a position corresponding to the position of each piece of the specified teaching material data D in the text data displayed on the application display window Wb. As a result, which teaching material data is usable for which learning application is clearly displayed. This allows a user to readily understand the correspondence between teaching material data D and a learning application G.

As shown in FIG. 18D, if a spread button Sb (an execution button) is operated, the available application GC corresponding to the spread button Sb is executed and the execution screen appears, the teaching material data D corresponding to the strip St for the spread button Sb is input to the available application GC, and the display content is updated. As a result, the displayed teaching material data D can be readily input to the available application GC for the teaching material data D.

It will be appreciated that a detailed configuration and a detailed operation of the data display apparatus 1 of the embodiment can be appropriately modified or altered within the scope without departing from the spirit of the present invention.

While some embodiments of the present invention have been described, the present invention is not limited to the embodiments, but the scope of the invention includes the scope of the technology according to claims and equivalents thereof.

## Claims

1. A data display apparatus including a display unit, the apparatus comprising:
an application storage unit that stores a type of application;
a display controller that displays a plurality of pieces of data in a data display area on the display unit;
an available-application-type detector that detects a type of available application, for which each of the pieces of data displayed in the data display area is usable, in the type of application stored in the application storage unit; and
an available-application-type display controller that displays the type of available application for each of the pieces of data displayed in the data display area, with the type of available application being associated with each of the pieces of data, based on a detection result obtained by the available-application-type detector.

2. The data display apparatus according to claim 1, wherein
the application, storage unit stores a plurality of types of applications.

3. The data display apparatus according to claim 2, wherein
the available-application-type display controller displays one or more types of the available applications for each of the pieces of data displayed in the data display area, with the one or more types of the available applications being associated with each of the pieces of data, based on the detection result obtained by the available-application-type detector.

4. The data display apparatus according to claim 2, wherein
the available-application-type display controller displays an icon that indicates the type of available application, with the icon being associated with each of the pieces of data.

5. The data display apparatus according to claim 2, further comprising,
an available-application specifying unit that specifies a piece of data displayed in the data display area and specifies the available application for the specified piece of data, based on a user operation, and
a data input display controller that executes the available application specified by the available-application specifying unit to display an execution screen on the display unit, inputs the piece of data specified by the available-application specifying unit to the execution screen of the available application, and updates a display content.

6. A data display apparatus including a display unit, the apparatus comprising:
an application storage unit that stores a type of application;
a display controller that displays a plurality of pieces of data in a data display area on the display unit;
an application execution unit that puts the application into an execution state based on a user operation; and
a usable-data distinguishing controller that distinguishably displays a piece of data usable for the application in the execution state, among the pieces of data displayed in the data display area.

7. The data display apparatus according to claim 6, wherein
the application storage unit stores a plurality of types of applications; and
the application execution unit is a specified-application execution unit that puts at least one of the types of applications into the execution state based on the user operation.

8. The data display apparatus according to claim 7, further comprising:
a data specifying unit that specifies a piece of data displayed in the data display area, based on the user operation; and
a data input unit that inputs the piece of data specified by the data specifying unit, to the application specified by the user operation among the at least one of the types of applications in the execution state.

9. The data display apparatus according to claim 8, further comprising,
an error display controller that displays, on the display unit, information indicating that the piece of data specified by the data specifying unit is unusable for the application to which the specified piece of data is input by the data input unit.

10. A data display apparatus including a display unit, the apparatus comprising:
an application storage unit that stores a plurality of types of applications;
a display controller that displays a file to be used for learning in a data display area on the display unit, the file including text data and one or more pieces of data;
a data specifying unit that specifies a region of a content displayed in the data display area, the region including at least one of the pieces of data, based on a user operation;
a text-area display controller that displays a text display area on the display unit and displays the text data in the region specified by the data specifying unit in the text display area;
an available-application-type detector that detects a type of available application, for which each of the at least one of the pieces of data in the specified region is usable, in the types of applications; and
an execution-button display controller that displays an execution button to execute the available application for the at least one of the pieces of data specified by the data specifying unit, the execution button being displayed at a position corresponding to a position of each of the at least one of the pieces of data, in the text data displayed in the text display area, based on a detection result obtained by the available-application-type detector.

11. The data display apparatus according to claim 10, further comprising a specified-data input display controller that executes the available application corresponding to the execution button to display an execution screen on the display unit, inputs a piece of data, corresponding to the execution button, to the execution screen of the available application, and updates a display content, in response to the user operation of the execution button.

12. A data display method for a computer, the computer including a display unit; and an application storage unit that stores a type of application, the method comprising:
(a) displaying a plurality of pieces of data in a data display area on the display unit;
(b) detecting a type of available application, for which each of the pieces of data displayed in the data display area is usable, in the type of application stored in the application storage unit; and
(c) displaying the type of available application for each of the pieces of data displayed in the data display area, with the type of available application being associated with each of the pieces of data, based on a detection result obtained by step (b).

13. A data display method for a computer, the computer including a display unit; and an application storage unit that stores a type of application, the method comprising:
(a) displaying a plurality of pieces of data in a data display area on the display unit;
(b) putting the application into an execution state based on a user operation; and
(c) distinguishably displaying a piece of data usable for the application in the execution state, among the pieces of data displayed in the data display area.

14. A data display method for a computer, the computer including a display unit; and an application storage unit that stores a plurality of types of applications, the method comprising:
(a) displaying a file to be used for learning in a data display area on the display unit, the file including text data and one or more pieces of data;
(b) specifying a region of a content displayed in the data display area, the region including at least one of the pieces of data, based on a user operation;
(c) displaying a text display area on the display unit and displaying the text data in the region specified by the data specifying unit in the text display area;
(d) detecting a type of available application, for which each of the at least one of the pieces of data in the specified region is usable, in the types of applications; and
(e) displaying an execution button to execute the available application for the at least one of the pieces of data specified by the data specifying unit, the execution button being displayed at a position corresponding to a position of each of the at least one of the pieces of data, in the text data displayed in the text display area, based on a detection result obtained by step (d).

15. A recording medium storing a data display control program to be executed by a computer including a display unit; and an application storage unit that stores a type of application, the program making the computer realize functions of:
a display controller that displays a plurality of pieces of data in a data display area on the display unit;
an available-application-type detector that detects a type of available application, for which each of the pieces of data displayed in the data display area is usable, in the type of application stored in the application storage unit; and
an available-application-type display controller that displays the type of available application for each of the pieces of data displayed in the data display area, with the type of available application being associated with each of the pieces of data, based on a detection result obtained by the available-application-type detector.

16. A recording medium storing a data display control program to be executed by a computer including a display unit; and an application storage unit that stores a type of application, the program making the computer realize functions of:
a display controller that displays a plurality of pieces of data in a data display area on the display unit;
an application execution unit that puts the application into an execution state based on a user operation; and
a usable-data distinguishing controller that distinguishably displays a piece of data usable for the application in the execution state, among the pieces of data displayed in the data display area.

17. A recording medium storing a data display control program to be executed by a computer including a display unit; and an application storage unit that stores a plurality of types of applications, the program making the computer realize functions of:
a display controller that displays a file to be used for learning in a data display area on the display unit, the file including text data and one or more pieces of data;
a data specifying unit that specifies a region of a content displayed in the data display area, the region including at least one of the pieces of data, based on a user operation;
a text-area display controller that displays a text display area on the display unit and displays the text data in the region specified by the data specifying unit in the text display area;
an available-application-type detector that detects a type of available application, for which each of the at least one of the pieces of data in the specified region is usable, in the types of applications; and
an execution-button display controller that displays an execution button to execute the available application for the at least one of the pieces of data specified by the data specifying unit, the execution button being displayed at a position corresponding to a position of each of the at least one of the pieces of data, in the text data displayed in the text display area, based on a detection result obtained by the available-application-type detector.
